# EUROPEAN PATENT SPECIFICATION

(11) **EP 3 085 752 B1**
(45) Date of publication and mention of the grant of the patent: **15.01.2020**
(21) Application number: 15164497.8
(22) Date of filing: 21.04.2015
(51) Int. Cl.: C09K 11/77

(54) **LUMINESCENT MATERIAL COMPRISING A STRONTIUM ALUMINATE MATRIX**
STRONIUMALUMINATMATRIX ENTHALTENDES LEUCHTSTOFFMATERIAL
MATERIAU LUMINESCENT COMPRENANT UNE MATRICE D'ALUMINATE DE STRONTIUM

(43) Date of publication of application: 26.10.2016
(73) Proprietor: LumiNova AG, Schweiz, 9053 Teufen (CH)
(72) Inventor: Walfort, Bernhard, 9245 Oberbüren (CH); Gartmann, Nando, 9500 Wil (CH); Yoon, Songhak, 8600 Dübendorf (CH); Pokrant, Simone, 8044 Zürich (CH); Bierwagen, Jakob, 01630 Saint-Genis-Pouilly (FR); Hagemann, Hans, 1258 Perly (CH)
(74) Representative: Hepp Wenger Ryffel AG

(56) References cited:
- EP-A1- 2 626 401
- US-A- 5 424 006
- US-A- 5 686 022
- US-A1- 2008 277 624
- US-A1- 2010 176 342
- US-A1- 2011 012 059

## Description

The present invention relates to a luminescent material, to a method for preparing a luminescent material, to a formulation containing a luminescent material, to the use of a luminescent material, and to an object at least partially coated with a luminescent material, according to the preambles of the independent claims.

Persistent luminescence is a phenomenon, whereby a material is excited with high energy radiation (typically ultraviolet light; but other forms of energy such as beta radiation can also be used) and the resulting visible luminescent emission persists for a significant amount of time after the excitation has been stopped (typically from a few seconds to many hours). This effect is also called phosphorescence, afterglow or long-lasting phosphorescence (LLP). The phenomenon has been known since ancient times and has been subject to scientific studies since the middle age. Nowadays, long-lasting phosphors are useful components of paint compositions and coatings for objects used indoors and outdoors. Typical commercial products with long-lasting phosphors include watch dials, pathway lighting, safety signals, safety gear (such as helmets) or traffic line markers.

For many decades, copper-doped zinc sulphide (ZnS:Cu) was the most widely used persistent phosphor. However, the afterglow-brightness and decay rate that could be achieved with this material was rather dissatisfactory for practical purposes. To circumvent this problem, traces of radioactive elements, such as promethium or tritium were often introduced into the paint formulations to stimulate light emission. But even then, commercial glow-in-the-dark objects had to contain a large amount of luminescent material to yield an acceptable afterglow.

In 1996, Matsuzawa and co-workers reported a new type of phosphorescent material with superior afterglow properties (J. Electrochem. Soc. 1996, 143, 2670-2673). By co-doping the green emitting phosphor SrAl₂O₄:Eu²⁺ with the rare earth element dysprosium (Dy³⁺) they were able to create a material that emitted bright light for hours after ending the excitation. The new phosphor exhibited both a far higher initial luminescence intensity and a much longer lifetime compared to classical zinc sulphide based materials. This seminal discovery triggered intensive research in many laboratories for different and better persistent luminescent materials.

The patent application WO 2011/008930 A2 discloses persistent phosphors that are based on alkaline earth aluminate matrices, wherein some of the oxygen anions in the phosphor matrix have been replaced by halides or nitride. In some cases, in addition to the halides, a charge compensator such as magnesium or zinc was additionally introduced. These phosphors exhibited significantly higher charging rates and initial emission intensities than previously known materials.

However, even for the most advanced phosphors, achieving high charging rates in combination with good emission persistence, up to now, still proves elusive. Known compounds with high charging rates generally tend to exhibit a short and intense afterglow. Phosphors with good emission persistence, on the other hand, usually require long exposure to a radiation source in order to reach saturation.

It is therefore a problem underlying the present invention to provide a luminescent material of the above-mentioned kind, which expresses a longer and preferably more intensive afterglow in combination with no significant decrease of the charging rate.

This problem is solved by a luminescent material according to claim 1, by a method for preparing a luminescent material according to claim 6, by a formulation containing a luminescent material according to claim 11, by the use of a luminescent material according to claim 12 and by an object at least partially coated with a luminescent material according to claim 13.

The luminescent material comprises a strontium aluminate matrix. This matrix can be based on SrAl₂O₄, but other matrices are also possible. The strontium aluminate matrix is doped with europium. A co-dopant can be added in combination with the first dopant. By way of example, if europium is used as a dopant, dysprosium can be added as a co-dopant. The material further comprises at least one alkaline earth metal and at least one alkali metal.

Moreover, the material can comprise at least one halogen, preferably chloride, wherein the molar ratio between the total of halogens and oxygen is between 0.00001 and 0.05, preferably between 0.00005 and 0.01, even more preferably between 0.00025 and 0.005.

On the other hand, the luminescent material can also comprise magnesium, wherein the molar ratio between magnesium and aluminum is between 0.0001 and 0.03, preferably between 0.0003 and 0.02, even more preferably between 0.0005 and 0.015.

The luminescent material can also comprise Ga, Sc, Y, Bi, or any of their combinations. In such a case, the molar ratio between Ga, Sc, Y, Bi, or any of their combinations and strontium is between 0.00001 and 0.05, preferably between 0.0001 and 0.02, even more preferably between 0.001 and 0.015.

Furthermore, the luminescent material can comprise Pb, Mn or any of their combinations. The molar ratio between Pb, Mn or any of their combinations and strontium is then between 0.00001 and 0.15, preferably between 0.0001 and 0.05, even more preferably between 0.001 and 0.02.

Phosphors with such a composition show a charging rate that is identical or only slightly diminished with respect to known materials. However, they exhibit an initial phosphorescence intensity and long term emission persistence that is superior.

For a luminescent material according to the present invention, the alkaline earth metal is barium. The second main group elements provide favorable afterglow characteristics. They are nontoxic and widely available at low prices.

The luminescent material is represented by the formula:

M¹ₐM²_{b}M³_{c}M⁴_{d}Eu_{g}M⁵ₕSr(_{1-a-b-c-d-g-h})MgₑAl_{(f-e)}O₍ₖ₋ᵢ₎Xᵢ

wherein
M¹ = Li, Na, K or any of their combinations;
a = 0.0001 to 0.015, preferably 0.00025 to 0.01;
M² = Ba;
b = 0.001 to 0.1, preferably 0.0025 to 0.075;
M³ = Sc, Ga, Y, Bi or any of their combinations;
c = 0 or
   c = 0.00001 to 0.05, preferably 0.0001 to 0.03, even more preferably 0.001 to 0.02;
M⁴ = Mn, Pb or any of their combinations;
d = 0 or
   d = 0.00001 to 0.05, preferably 0.0001 to 0.05, even more preferably 0.001 to 0.02;
e = 0 or
   e = 0.0002 to 0.06, preferably 0.0006 to 0.04, even more preferably 0.001 to 0.03;
f = 1.8 to 2.6;
g = 0.00001 to 0.06;
M⁵ = Dy, Nd or any of their combinations;
h = 0 or
   h = 0.00001 to 0.06;
X = F, Cl, Br or any of their combinations;
i = 0 or
i = 0.00004 to 0.04, preferably 0.0002 to 0.04, even more preferably 0.001 to 0.002.

In the above formula, k-i represents the total amount of oxygen in the luminescent material. The value of k is dependent on the selected starting materials and on the reaction conditions employed.

The value of g represents the total amount of europium in the luminescent material. It is known to the skilled person that europium can be present as Eu²⁺ and Eu³⁺. Consequently, g is the sum of g1 and g2, wherein g1 represents the total amount of Eu²⁺ and g2 the total amount of Eu³⁺. 2-a+c+g2+h-e+3f-2k+i can be equal to zero.

The luminescent material can have a particle size distribution, wherein at least 60% of the particles have a diameter between 1 µm and 200 µm, preferably between 2 µm and 100 µm, even more preferably between 5 µm and 60 µm. On the other hand, the luminescent material can also have a particle size distribution wherein at least 90% of the particles have a diameter between 1 µm and 200 µm, preferably between 2 µm and 100 µm, even more preferably between 5 µm and 60 µm.

The luminescent material can have an emission wavelength between 420 nm and 700 nm. Furthermore, the luminescent material can have an emission maximum between 480 nm and 550 nm.

As mentioned above, the invention also relates to a method for preparing a luminescent material. The method comprises the steps of
- mixing the starting materials to obtain a mixture, preferably in the solid state, even more preferably with a ball mill;
- heating the mixture under reductive conditions, in particular under a reductive atmosphere, preferably comprising N₂/H₂ or N_{2/}CO, wherein the mixture is heated to a temperature between 1000 °C and 2000 °C, preferably between 1100 and 1900 °C, even more preferably between 1300 °C and 1700 °C;
- allowing the mixture to cool to ambient temperature;
- milling the resulting product to obtain a milled product.

The composition of the chemical elements in the mixture satisfies the formula:

M¹ₐM²_{b}M³_{c}M⁴_{d}Eu_{(g-h)}M⁵ₕSr_{(1-a-b-c-d-g)}MgₑAl_{(f-e})O₍ₖ₋₁₎Xᵢ

wherein
M¹ = Li, Na, K or any of their combinations;
a = 0.0001 to 0.015, preferably 0.00025 to 0.01;
M² = Ba;
b = 0.001 to 0.1, preferably 0.0025 to 0.075;
M³ = Sc, Ga, Y, Bi or any of their combinations;
c = 0 or
   c = 0.00001 to 0.05, preferably 0.0001 to 0.03, even more preferably 0.001 to 0.02;
M⁴ = Mn, Pb or any of their combinations;
d = 0 or
   d = 0.00001 to 0.05, preferably 0.0001 to 0.05, even more preferably 0.001 to 0.02;
e = 0 or
   e = 0.0002 to 0.06, preferably 0.0006 to 0.04, even more preferably 0.001 to 0.03;
f = 1.8 to 2.6;
g = 0.00001 to 0.06;
M⁵ = Dy, Nd or any of their combinations;
h = 0 or
   h = 0.00001 to 0.06;
X = F, Cl, Br or any of their combinations;
i = 0 or
   i = 0.00004 to 0.04, preferably 0.0002 to 0.04, even more preferably 0.001 to 0.002.

The significance of the coefficients k and g has been explained above.

In the described method for preparing a luminescent material, the starting materials can be metal oxides and/or metal carbonates and/or metal halogens, in particular metal chlorides. Such staring materials are generally readily available and usually susceptible to solid state synthesis. Furthermore, at least one starting material can be a metal salt that undergoes conversion to the corresponding oxide upon heating of the mixture. Preferably, such a metal salt is a carboxylate, even more preferably an acetate or an oxalate.

Typical staring materials for preparing a luminescent material according to the present invention are:
- SrCO₃, Sr(CH₃CO₂)₂, Sr(C₂O₄), SrCl₂
- Al₂O₃, AlCl₃
- BaCO₃, BaCl₂
- Na₂CO₃, NaCl
- MgCO₃, MgCl₂
- MnO
- PbCO₃, PbCl₂
- Ga₂O₃, Sc₂O₃, Y₂O₃, Bi₂O₃
- Eu₂O₃, Dy₂O₃

The method for preparing a luminescent material can further comprise the step of fractionizing the milled product according to the particle size. This way, a particularly narrow particle size distribution can be achieved.

The mixture of starting materials can additionally contain a fluxing agent, preferably boric acid or boron trioxide, wherein the portion of the fluxing agent in the mixture is not considered in the composition of the chemical elements. Such a fluxing agent can facilitate a solid state chemical reaction.

The present invention also refers to a formulation containing an above-described luminescent material. Such a formulation can be a paint, a varnish, a plastic material, a glass or a ceramic. In the course of the production of such a formulation, the luminescent material is typically mixed with the raw materials.

Furthermore, the present invention also refers to the use of a luminescent material as described above, or of a formulation described in the previous paragraph, for at least partially coating an object.

The invention also refers to an object at least partially coated with a luminescent material or with a formulation as described above. Such an object can be an instrument, pathway lighting, a safety signal, safety gear (such as a helmet) or a traffic line marker. In the present context, an instrument can be a watch or a clock. In such a case, the luminescent material or the formulation thereof is preferably applied to the dial of a watch or a clock. However, the instrument can also be any other device used to determine a value of quantity under measurement. The instrument can be portable, stationary, or it can be mounted in any kind of vehicle or craft, such as a car, an airplane, a space-ship, a ship or a boat.

Further advantages and features of the invention become apparent from the following description of several embodiments and from the figures.

It is shown in
- Figure 1:: Charging curves of Comparative Example B and Example 2 according to the present invention;
- Figure 2:: Afterglow curves of Comparative Example B and Example 2 according to the present invention;
- Figure 3:: Emission spectra of Comparative Example B and Example 2 according to the present invention;
- Figure 4:: Powder diffractogram of Example 2 according to the present invention;
- Figure 5:: Charging curves of Examples 18 and 20 according to the present invention;
- Figure 6:: Charging curves of Examples 43 and 45 according to the present invention;
- Figure 7:: Charging curves of Examples 55 and 56 according to the present invention.

The luminescent materials of examples 1 and 2 were prepared by the above-described method and compared with the material of Comparative Examples A and B according to WO 2011/008930 A2.

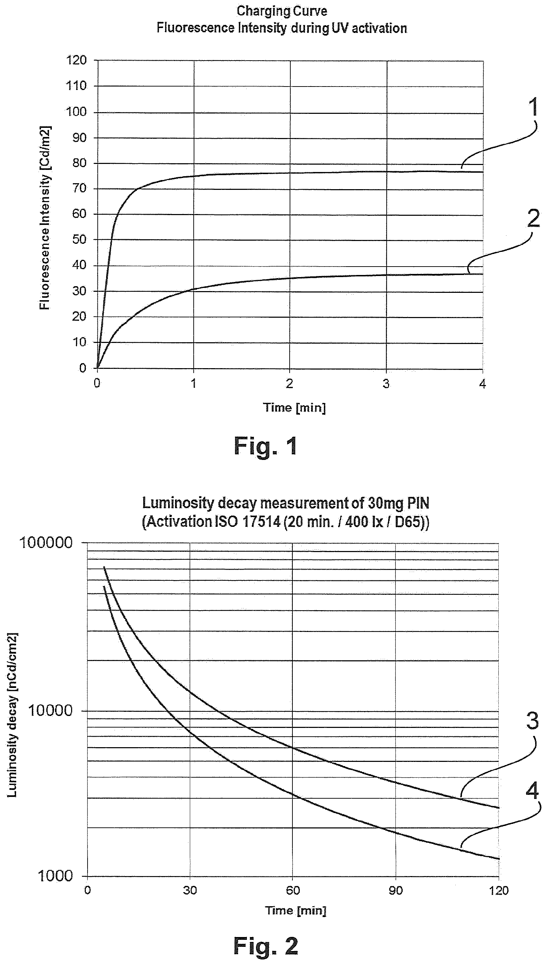

Figure 1 shows the charging curve 1 of Comparative Example B and the charging curve 2 of Example 2 according to the present invention. It is important to note that charging curves are recorded as combined intensity of phosphorescence and fluorescence as function of time under continuous irradiation. Consequently, they do directly reflect the afterglow properties of a material, but rather the fraction of energy that is re-emitted under constant excitation. It can be seen that both Comparative Example B and Example 2 according to the present invention reach full saturation upon UV activation for a few minutes. The charging rate of Example 2 is only slightly diminished with respect to Comparative Example B.

Figure 2 shows the afterglow curve 3 of Example 2 and the afterglow curve 4 of Comparative Example B. It emerges that Example 2 exhibits higher afterglow intensity with a lower luminescence decay rate over the whole recorded time interval.

Table 1 provides an overview of Examples A and B as well as examples 1 and 2 according to the present invention. The compositions of the materials are listed together with their relative brightness after 10 minutes (RB10) and 120 minutes (RB120). The decay rate can be expressed by the ratio between RB10 and RB120. Numeric values representing compositions refer to stoichiometric coefficients in an above formula. All afterglow measurements presented herein were performed according to ISO 17514. It can be seen that the luminescent materials according to the present invention exhibit a higher brightness after 10 minutes (RB10) and a significantly increased afterglow persistence (cf. RB120) compared to the prior art.

**Table 1**

| | **Sr** | **Al** | **BaCl₂** | **Ba** | **Na** | **SrCl2** | **Mg** | **Eu** | **Dy** | **RB10** | **RB120** |
|---|---|---|---|---|---|---|---|---|---|---|---|
| Comparative Example A (WO 2011/008930 A2) | 0,900 | 2,000 | 0,000 | 0,000 | 0,000 | 0,040 | 0,000 | 0,020 | 0,040 | **98%** | **89%** |
| Comparative Example B (WO 2011/008930 A2) | 0,900 | 2,000 | 0,040 | 0,000 | 0,000 | 0,000 | 0,000 | 0,020 | 0,040 | **100%** | **100%** |
| Example 1 | 0,924 | 2,050 | 0,000 | 0,050 | 0,002 | 0,0015 | 0,000 | 0,0125 | 0,010 | **135%** | **192%** |
| Example 2 | 0,924 | 2,040 | 0,000 | 0,050 | 0,002 | 0,0015 | 0,010 | 0,0125 | 0,010 | **149%** | **205%** |

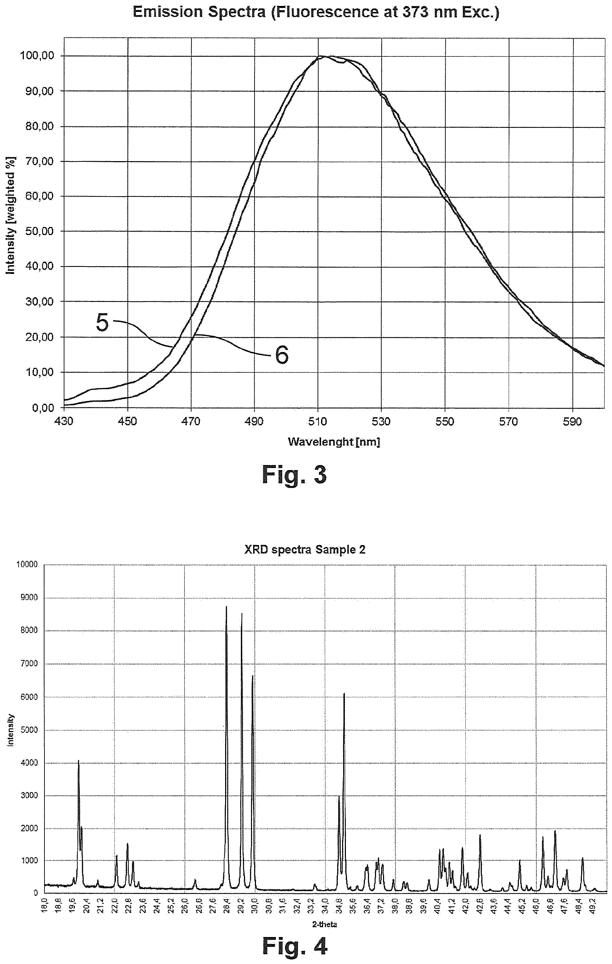

Figure 3 shows the emission spectrum 5 of Example 2 and the emission spectrum 6 of Comparative Example B. Both spectra were recorded as fluorescence emission spectra with an excitation wavelength of 373 nm.

Figure 4 shows a powder diffractogram (XRD) of Example 2 according to the present invention. For this diffractogram, a pure strontium aluminate phase was measured.

Luminescent materials of the described kind were prepared with various amounts of barium chloride (Examples 3-7, Table 2). It can be seen that the addition of high amounts barium chloride have an adverse effect on the afterglow characteristics.

**Table 2**

| | **Sr** | **Al** | **BaCl₂** | **Ba** | **Na** | **Eu** | **Dy** | **RB10** | **RB120** |
|---|---|---|---|---|---|---|---|---|---|
| Example 3 | 0,9255 | 2,050 | 0,0015 | 0,0485 | 0,002 | 0,0125 | 0,010 | **100%** | **100%** |
| Example 4 | 0,9655 | 2,050 | 0,010 | 0,000 | 0,002 | 0,0125 | 0,010 | **99%** | **84%** |
| Example 5 | 0,9505 | 2,050 | 0,025 | 0,000 | 0,002 | 0,0125 | 0,010 | **92%** | **75%** |
| Example 6 | 0,9255 | 2,050 | 0,050 | 0,000 | 0,002 | 0,0125 | 0,010 | **59%** | **51%** |
| Example 7 | 0,9005 | 2,050 | 0,075 | 0,000 | 0,002 | 0,0125 | 0,010 | **42%** | **38%** |

In order to study the influence of barium on the phosphorescence, luminescent materials with different amounts of this alkaline earth metal were prepared (Examples 8-12) and their luminescence brightness was examined. The results of these measurements are listed in Table 3. Example 11 exhibits the best afterglow characteristics, which corresponds to a ratio of barium to strontium of 0.0541.

**Table 3**

| | **Sr** | **Al** | **Ba** | **Na** | **SrCl₂** | **Eu** | **Dy** | **RB10** | **RB120** |
|---|---|---|---|---|---|---|---|---|---|
| Example 8 | 0,9740 | 2,050 | 0,0000 | 0,0020 | 0,0015 | 0,0125 | 0,010 | **100%** | **100%** |
| Example 9 | 0,9690 | 2,050 | 0,005 | 0,0020 | 0,0015 | 0,0125 | 0,010 | **115%** | **108%** |
| Example 10 | 0,9540 | 2,050 | 0,0200 | 0,0020 | 0,0015 | 0,0125 | 0,010 | **123%** | **114%** |
| Example 11 | 0,9240 | 2,050 | 0,050 | 0,0020 | 0,0015 | 0,0125 | 0,010 | **123%** | **118%** |
| Example 12 | 0,8740 | 2,050 | 0,1000 | 0,0020 | 0,0015 | 0,0125 | 0,010 | **92%** | **89%** |

Table 4 shows a further series of measurements (Examples 13-17), in which the influence of the addition of sodium was probed. Example 15 was found to show the brightest and longest afterglow. The sodium content of Example 15 corresponds to a ratio between sodium and strontium of 0.0016.

**Table 4**

| | **Sr** | **Al** | **Ba** | **Na** | **SrCl₂** | **Eu** | **Dy** | **RB10** | **RB120** |
|---|---|---|---|---|---|---|---|---|---|
| Example 13 | 0,9260 | 2,050 | 0,0500 | 0,0000 | 0,0015 | 0,0125 | 0,010 | **100%** | **100%** |
| Example 14 | 0,9250 | 2,050 | 0,050 | 0,001 | 0,0015 | 0,0125 | 0,010 | **102%** | **103%** |
| Example 15 | 0,9245 | 2,050 | 0,0500 | 0,0015 | 0,0015 | 0,0125 | 0,010 | **124%** | **113%** |
| Example 16 | 0,9230 | 2,050 | 0,050 | 0,003 | 0,0015 | 0,0125 | 0,010 | **99%** | **95%** |
| Example 17 | 0,9160 | 2,050 | 0,0500 | 0,010 | 0,0015 | 0,0125 | 0,010 | **97%** | **94%** |

Table 5 shows another series of experiments, in which the effect of the magnesium content has been studied (Examples 18-22). It emerges that Example 20 shows the highest afterglow brightness and the slowest luminescence decay. The ratio between magnesium and aluminum in this phosphor is 0.0049.

**Table 5**

| | **Sr** | **Al** | **Ba** | **Na** | **SrCl₂** | **Mg** | **Eu** | **Dy** | **RB10** | **RB120** |
|---|---|---|---|---|---|---|---|---|---|---|
| Example 18 | 0,9240 | 2,050 | 0,0500 | 0,0020 | 0,0015 | 0,000 | 0,0125 | 0,010 | **100%** | **100%** |
| Example 19 | 0,9240 | 2,048 | 0,0500 | 0,0020 | 0,0015 | 0,0025 | 0,0125 | 0,010 | **115%** | **112%** |
| Example 20 | 0,9240 | 2,040 | 0,0500 | 0,0020 | 0,0015 | 0,010 | 0,0125 | 0,010 | **123%** | **115%** |
| Example 21 | 0,9240 | 2,025 | 0,0500 | 0,0020 | 0,0015 | 0,025 | 0,0125 | 0,010 | **98%** | **94%** |
| Example 22 | 0,9240 | 2,000 | 0,0500 | 0,0020 | 0,0015 | 0,050 | 0,0125 | 0,010 | **48%** | **50%** |

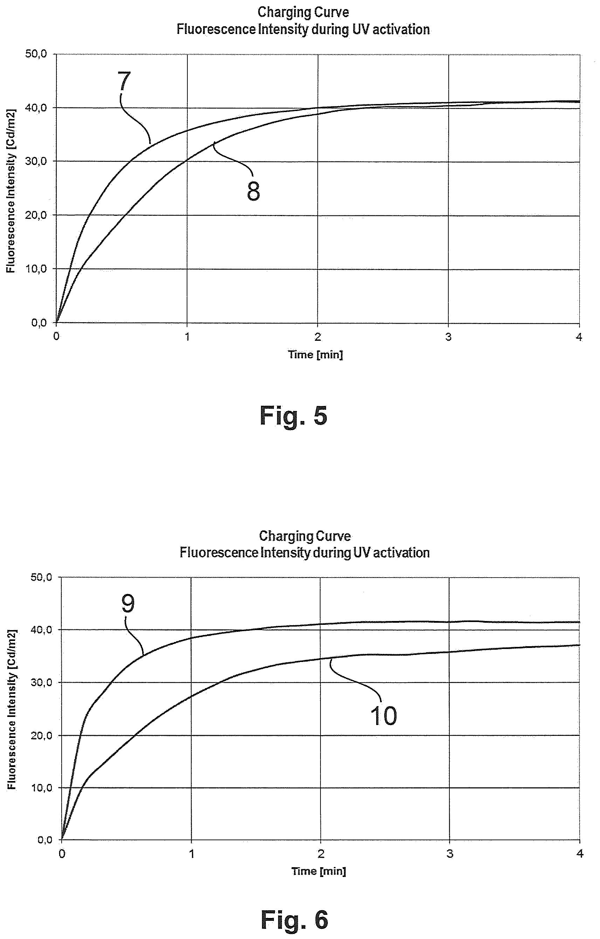

The influence of magnesium on the charging rate was also examined. Figure 5 shows the charging curves 7 of Example 20 and the charging curve 8 of Example 18. The addition of magnesium leads to a significant increase of the charging rate.

Table 6 lists Examples 23 to 26, in which manganese has been added to the luminescent materials in absence of magnesium. Example 25, which corresponds to a ratio of manganese to strontium of 0.0054, exhibits the strongest afterglow brightness.

**Table 6**

| | **Sr** | **Al** | **Ba** | **Mn** | **Eu** | **Dy** | **RB10** | **RB120** |
|---|---|---|---|---|---|---|---|---|
| Example 23 | 0,9275 | 2,050 | 0,0500 | 0,0000 | 0,0125 | 0,010 | **100%** | **100%** |
| Example 24 | 0,9265 | 2,050 | 0,050 | 0,0010 | 0,0125 | 0,010 | **97%** | **97%** |
| Example 25 | 0,9225 | 2,050 | 0,0500 | 0,005 | 0,0125 | 0,010 | **103%** | **105%** |
| Example 26 | 0,9175 | 2,050 | 0,0500 | 0,010 | 0,0125 | 0,010 | **101%** | **103%** |

Table 7 represents a series of experiments, in which the addition of the same amounts of manganese as in table 6 has been repeated, but with the concomitant addition of sodium (Examples 27-30). Example 29 shows the best afterglow behavior, which again corresponds to a ratio of manganese to strontium of 0.0054. Surprisingly, a synergistic effect of manganese and sodium was observed, as the influence of manganese in presence of sodium is markedly higher, in particular for the relative brightness after 120 minutes (cf. Example 29: BR120 = 113% vs. Example 25: BR120 = 105%).

**Table 7**

| | **Sr** | **Al** | **Ba** | **Na** | **Mn** | **Eu** | **Dy** | **RB10** | **RB120** |
|---|---|---|---|---|---|---|---|---|---|
| Example 27 | 0,9255 | 2,050 | 0,0500 | 0,0020 | 0,000 | 0,0125 | 0,010 | **100%** | **100%** |
| Example 28 | 0,9245 | 2,050 | 0,0500 | 0,0020 | 0,0010 | 0,0125 | 0,010 | **104%** | **103%** |
| Example 29 | 0,9205 | 2,050 | 0,0500 | 0,0020 | 0,005 | 0,0125 | 0,010 | **109%** | **113%** |
| Example 30 | 0,9155 | 2,050 | 0,0500 | 0,0020 | 0,010 | 0,0125 | 0,010 | **107%** | **110%** |

The experiments shown in Table 8 (Examples 31-34) correspond to those of Table 6, but with lead added instead of manganese. Unlike manganese, lead had an invariably deleterious effect on the phosphorescence in this series, with a gradual decrease of the afterglow brightness through increasing lead content.

**Table 8**

| | **Sr** | **Al** | **Ba** | **Pb** | **Eu** | **Dy** | **RB10** | **RB120** |
|---|---|---|---|---|---|---|---|---|
| Example 31 | 0,9275 | 2,050 | 0,0500 | 0,0000 | 0,0125 | 0,010 | **100%** | **100%** |
| Example 32 | 0,9265 | 2,050 | 0,050 | 0,0010 | 0,0125 | 0,010 | **99%** | **96%** |
| Example 33 | 0,9225 | 2,050 | 0,0500 | 0,005 | 0,0125 | 0,010 | **94%** | **92%** |
| Example 34 | 0,9175 | 2,050 | 0,0500 | 0,010 | 0,0125 | 0,010 | **86%** | **84%** |

In Table 9 (Examples 35-38), analogous amounts of lead have been added like in table 8, but in the presence of sodium. It was observed that, in this case, the addition of lead leads to a dramatic improvement of the luminous brightness and persistence. The best result was achieved with the highest lead content, which corresponds to a ratio of lead to strontium of 0.0109 (cf. Example 38: RB10 = 130%, RB120 = 119%).

**Table 9**

| | **Sr** | **Al** | **Ba** | **Na** | **Pb** | **Eu** | **Dy** | **RB10** | **RB120** |
|---|---|---|---|---|---|---|---|---|---|
| Example 35 | 0,9255 | 2,050 | 0,0500 | 0,0020 | 0,000 | 0,0125 | 0,010 | **100%** | **100%** |
| Example 36 | 0,9245 | 2,050 | 0,0500 | 0,0020 | 0,0010 | 0,0125 | 0,010 | **108%** | **107%** |
| Example 37 | 0,9205 | 2,050 | 0,0500 | 0,0020 | 0,005 | 0,0125 | 0,010 | **115%** | **114%** |
| Example 38 | 0,9155 | 2,050 | 0,0500 | 0,0020 | 0,010 | 0,0125 | 0,010 | **130%** | **119%** |

Tables 10 to 13 show the effect of the addition of various amounts of the main group elements Ga or Bi as well as of the transition metals Sc or Y on the phosphorescence of materials according to the present invention. It can be seen that the addition of all of those elements has an advantageous effect on brightness and length of the luminescence. In the case of the addition of Ga, the best afterglow characteristics were observed with the highest amount added (Example 42), which corresponds to a ratio of Ga to Sr of 0.0109. With the transition metals Sc and Y, best results were achieved by the addition of the same molar amount of transition metal, which corresponds to a ratio of transition metal to strontium of 0.0045 (Examples 45 and 49). For Bi, the highest increase of the relative brightness (BR10 = 115%, BR120 = 113%) was accomplished in Example 52, with a ratio of Bi to strontium of 0.0011.

**Table 10**

| | **Sr** | **Al** | **Ba** | **Na** | **Ga** | **Eu** | **Dy** | **RB10** | **RB120** |
|---|---|---|---|---|---|---|---|---|---|
| Example 39 | 0,9255 | 2,050 | 0,0500 | 0,0020 | 0,000 | 0,0125 | 0,010 | **100%** | **100%** |
| Example 40 | 0,9245 | 2,050 | 0,0500 | 0,0020 | 0,0010 | 0,0125 | 0,010 | **100%** | **102%** |
| Example 41 | 0,9205 | 2,050 | 0,0500 | 0,0020 | 0,005 | 0,0125 | 0,010 | **124%** | **120%** |
| Example 42 | 0,9155 | 2,050 | 0,0500 | 0,0020 | 0,010 | 0,0125 | 0,010 | **124%** | **121%** |

**Table 11**

| | **Sr** | **Al** | **Ba** | **Na** | **Sc** | **Eu** | **Dy** | **RB10** | **RB120** |
|---|---|---|---|---|---|---|---|---|---|
| Example 43 | 0,9255 | 2,050 | 0,0500 | 0,0020 | 0,000 | 0,0125 | 0,010 | **100%** | **100%** |
| Example 44 | 0,9245 | 2,050 | 0,0500 | 0,0020 | 0,0010 | 0,0125 | 0,010 | **104%** | **105%** |
| Example 45 | 0,9205 | 2,050 | 0,0500 | 0,0020 | 0,005 | 0,0125 | 0,010 | **123%** | **118%** |
| Example 46 | 0,9155 | 2,050 | 0,0500 | 0,0020 | 0,010 | 0,0125 | 0,010 | **114%** | **107%** |

**Table 12**

| | **Sr** | **Al** | **Ba** | **Na** | **Y** | **Eu** | **Dy** | **RB10** | **RB120** |
|---|---|---|---|---|---|---|---|---|---|
| Example 47 | 0,9255 | 2,050 | 0,0500 | 0,0020 | 0,000 | 0,0125 | 0,010 | **100%** | **100%** |
| Example 48 | 0,9245 | 2,050 | 0,0500 | 0,0020 | 0,0010 | 0,0125 | 0,010 | **109%** | **105%** |
| Example 49 | 0,9205 | 2,050 | 0,0500 | 0,0020 | 0,005 | 0,0125 | 0,010 | **114%** | **105%** |
| Example 50 | 0,9155 | 2,050 | 0,0500 | 0,0020 | 0,010 | 0,0125 | 0,010 | **96%** | **89%** |

**Table 13**

| | **Sr** | **Al** | **Ba** | **Na** | **Bi** | **Eu** | **Dy** | **RB10** | **RB120** |
|---|---|---|---|---|---|---|---|---|---|
| Example 51 | 0,9255 | 2,050 | 0,0500 | 0,0020 | 0,000 | 0,0125 | 0,010 | **100%** | **100%** |
| Example 52 | 0,9245 | 2,050 | 0,0500 | 0,0020 | 0,0010 | 0,0125 | 0,010 | **115%** | **113%** |
| Example 53 | 0,9205 | 2,050 | 0,0500 | 0,0020 | 0,005 | 0,0125 | 0,010 | **88%** | **92%** |
| Example 54 | 0,9155 | 2,050 | 0,0500 | 0,0020 | 0,010 | 0,0125 | 0,010 | **84%** | **85%** |

The influence of the addition of scandium on the charging rates was also examined. Figure 6 shows the charging curve 9 of Example 45 and the charging curve 10 of Example 43. It can be seen that the addition of scandium to the materials leads to a significant increase of the charging rate.

Table 14 shows the effect of chlorine addition on the afterglow brightness. Among the materials tested, Example 56 with a ratio of chlorine to oxygen of 0.0008 showed the highest afterglow brightness and persistence (cf. Example 56: RB10 = 108%, RB120 = 112%) .

**Table 14**

| | **Sr** | **Al** | **Ba** | **Na** | **SrCl₂** | **Eu** | **Dy** | **RB10** | **RB120** |
|---|---|---|---|---|---|---|---|---|---|
| Example 55 | 0,9255 | 2,050 | 0,0500 | 0,0020 | 0,000 | 0,0125 | 0,010 | **100%** | **100%** |
| Example 56 | 0,9240 | 2,038 | 0,0500 | 0,0020 | 0,0015 | 0,0125 | 0,010 | **108%** | **112%** |
| Example 57 | 0,9225 | 2,038 | 0,0500 | 0,0020 | 0,003 | 0,0125 | 0,010 | **105%** | **110%** |
| Example 58 | 0,9205 | 2,038 | 0,0500 | 0,0020 | 0,005 | 0,0125 | 0,010 | **90%** | **98%** |
| Example 59 | 0,9155 | 2,038 | 0,0500 | 0,0020 | 0,010 | 0,0125 | 0,010 | **93%** | **100%** |

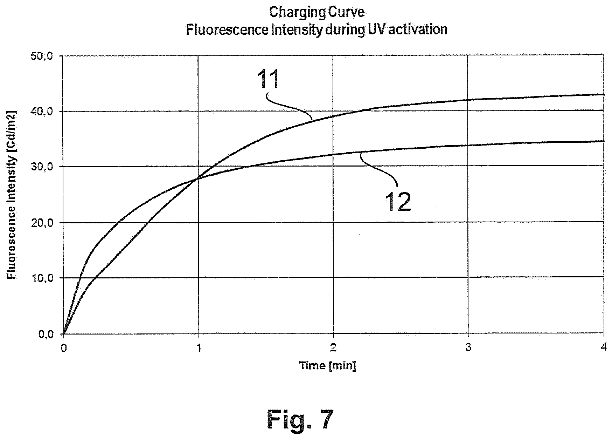

According to Figure 7, the influence of chloride addition on the charging rate was also assessed. Charging curve 11 corresponds to Example 55 and charging curve 12 to Example 56. It is evident that the addition of chloride leads to an increase of the charging rate, which is connected to a decrease of the saturation fluorescence brightness. As stated above, this property is insignificant for the afterglow properties of the materials.

## Claims

1. A luminescent material comprising a strontium aluminate matrix, **characterized in that**, the material further comprises at least one alkaline earth metal, at least one alkali metal and at least one further element selected from the group consisting of
- a halogen, preferably chlorine, wherein the molar ratio between the total of halogens and oxygen is between 0.00001 and 0.05, preferably between 0.00005 and 0.01, even more preferably between 0.00025 and 0.005;
- magnesium, wherein the molar ratio between magnesium and aluminum is between 0.0001 and 0.03, preferably between 0.0003 and 0.02, even more preferably between 0.0005 and 0.015;
- Ga, Sc, Y, Bi or any of their combinations, wherein the molar ratio between Ga, Sc, Y, Bi or any of their combinations and strontium is between 0.00001 and 0.05, preferably between 0.0001 and 0.02, even more preferably between 0.001 and 0.015;
- Pb, Mn or any of their combinations, wherein the molar ratio between Pb, Mn or any of their combinations and strontium is between 0.00001 and 0.15, preferably between 0.0001 and 0.05, even more preferably between 0.001 and 0.02;
such luminescent material being represented by the formula
M¹ₐM²_{b}M³_{c}M⁴_{d}Eu_{g}M⁵ₕSr_{(1-a-b-c-d-g-h)}MgₑAl_{(f-e)}O₍ₖ₋ᵢ₎Xᵢ
wherein
M¹ = Li, Na, K or any of their combinations;
a = 0.0001 to 0.015, preferably 0.00025 to 0.01;
M² = Ba;
b = 0.001 to 0.1, preferably 0.0025 to 0.075;
M³ = Sc, Ga, Y, Bi or any of their combinations;
c = 0 or
c = 0.00001 to 0.05, preferably 0.0001 to 0.03, even more preferably 0.001 to 0.02;
M⁴ = Mn, Pb or any of their combinations;
d = 0 or
d = 0.00001 to 0.05, preferably 0.0001 to 0.05, even more preferably 0.001 to 0.02;
e = 0 or
e = 0.0002 to 0.06, preferably 0.0006 to 0.04, even more preferably 0.001 to 0.03;
f = 1.8 to 2.6;
g = 0.00001 to 0.06;
M⁵ = Dy, Nd or any of their combinations;
h = 0 or
h = 0.00001 to 0.06;
X = F, Cl, Br or any of their combinations;
i = 0 or
i = 0.00004 to 0.04, preferably 0.0002 to 0.04, even more preferably 0.001 to 0.002.

2. A luminescent material according to claim 1, having a particle size distribution, wherein at least 60% of the particles have a diameter between 1 µm and 200 µm, preferably between 2 µm and 100 µm, even more preferably between 5 µm and 60 µm.

3. A luminescent material according to claim 1, having a particle size distribution, wherein at least 90% of the particles have a diameter between 1 µm and 200 µm, preferably between 2 µm and 100 µm, even more preferably between 5 µm and 60 µm.

4. A luminescent material according to one of claims 1 to 3, having an emission wavelength between 420 nm and 700 nm.

5. A luminescent material according to one of claims 1 to 4, having an emission maximum between 480 nm and 550 nm.

6. A method for preparing a luminescent material, comprising the steps of
- mixing the starting materials to obtain a mixture, preferably in the solid state, even more preferably with a ball mill,
- heating the mixture under reductive conditions, in particular under a reductive atmosphere, preferably comprising N₂/H₂ or N_{2/}CO, wherein the mixture is heated to a temperature between 1000 °C and 2000 °C, preferably between 1100 °C and 1900 °C, even more preferably between 1300 °C and 1700 °C,
- allowing the mixture to cool to ambient temperature,
- milling the resulting product to obtain a milled product,
**characterized in that**, the composition of the chemical elements in the mixture satisfies the formula
M¹ₐM²_{b}M³_{c}M⁴_{d}Eu_{(g-h)}M⁵ₕSr_{(1-a-b-c-d-g)}MgₑAl_{(f-e)}O₍ₖ₋ᵢ₎Xᵢ
wherein
M¹ = Li, Na, K or any of their combinations;
a = 0.0001 to 0.015, preferably 0.00025 to 0.01;
M² = Ba;
b = 0.001 to 0.1, preferably 0.0025 to 0.075;
M³ = Sc, Ga, Y, Bi or any of their combinations;
c = 0 or
c = 0.00001 to 0.05, preferably 0.0001 to 0.03, even more preferably 0.001 to 0.02;
M⁴ = Mn, Pb or any of their combinations;
d = 0 or
d = 0.00001 to 0.05, preferably 0.0001 to 0.05, even more preferably 0.001 to 0.02;
e = 0 or
e = 0.0002 to 0.06, preferably 0.0006 to 0.04, even more preferably 0.001 to 0.03;
f = 1.8 to 2.6;
g = 0.00001 to 0.06;
M⁵ = Dy, Nd or any of their combinations;
h = 0 or
h = 0.00001 to 0.06;
X = F, Cl, Br or any of their combinations;
i = 0 or
i = 0.00004 to 0.04, preferably 0.0002 to 0.04, even more preferably 0.001 to 0.002.

7. A method for preparing a luminescent material according to claim 6, **characterized in that**, the starting materials are metal oxides and/or metal carbonates and/or metal halogens, in particular metal chlorides.

8. A method for preparing a luminescent material according to one of claims 6 or 7, **characterized in that** at least one starting material is a metal salt that undergoes conversion to the corresponding oxide upon heating of the mixture under the conditions set forth in claim 8, wherein the metal salt preferably is a carboxylate, even more preferably an acetate or an oxalate.

9. A method for preparing a luminescent material according to one of claims 6 to 8, additionally comprising the step of fractionizing the milled product according to the particle size.

10. A method for preparing a luminescent material according to one of claims 6 to 9, **characterized in that**, the mixture of starting materials additionally contains a fluxing agent, preferably boric acid or boron trioxide, wherein the portion of the fluxing agent in the mixture is not considered in the composition of the chemical elements.

11. Formulation containing a luminescent material according to one of claims 1 to 5.

12. Use of a luminescent material according to one of claims 1 to 5, or of a formulation according to claim 11, for at least partially coating an object.

13. Object at least partially coated with a luminescent material according to one of claims 1 to 5, or with a formulation according to claim 11.

## Patentansprüche

1. Lumineszierendes Material, umfassend eine Strontiumaluminatmatrix, **dadurch gekennzeichnet, dass** das Material ferner mindestens ein Erdalkalimetall, mindestens ein Alkalimetall und mindestens ein weiteres Element umfasst, ausgewählt aus der Gruppe bestehend aus
- einem Halogen, vorzugsweise Chlor, wobei das molare Verhältnis zwischen der Summe der Halogene und Sauerstoff zwischen 0.00001 und 0.05, vorzugsweise zwischen 0.00005 und 0.01, noch bevorzugter zwischen 0.00025 und 0.005 liegt;
- Magnesium, wobei das Molverhältnis zwischen Magnesium und Aluminium zwischen 0.0001 und 0.03, vorzugsweise zwischen 0.0003 und 0.02, noch bevorzugter zwischen 0.0005 und 0.015 liegt;
- Ga, Sc, Y, Bi oder einer Kombination davon, wobei das Molverhältnis zwischen Ga, Sc, Y, Bi oder einer Kombination davon und Strontium zwischen 0.00001 und 0.05, vorzugsweise zwischen 0.0001 und 0.02, noch bevorzugter zwischen 0.001 und 0.015 liegt;
- Pb, Mn oder einer Kombination davon, wobei das Molverhältnis zwischen Pb, Mn oder einer Kombination davon und Strontium zwischen 0.00001 und 0.15, vorzugsweise zwischen 0.0001 und 0.05, noch bevorzugter zwischen 0.001 und 0.02 liegt;
wobei dieses lumineszierende Material durch die Formel dargestellt wird
M¹ₐM²_{b}M³_{c}M⁴_{d}Eu_{g}M⁵ₕSr_{(1-a-b-c-d-g-h)}MgₑAl_{(f-e)}O₍ₖ₋ᵢ₎Xᵢ
wobei
M¹ = Li, Na, K oder eine Kombination davon;
a = 0.0001 bis 0.015, bevorzugt 0.00025 bis 0.01;
M² = Ba;
b = 0.001 bis 0.1, bevorzugt 0.0025 bis 0.075;
M³ = Sc, Ga, Y, Bi oder eine Kombination davon;
c = 0 oder
c = 0.00001 bis 0.05, bevorzugt 0.0001 bis 0.03, besonders bevorzugt 0.001 bis 0.02;
M⁴ = Mn, Pb oder eine Kombination davon;
d = 0 oder
d = 0.00001 bis 0.05, bevorzugt 0.0001 bis 0.05, besonders bevorzugt 0.001 bis 0.02;
e = 0 oder
e = 0.0002 bis 0.06, bevorzugt 0.0006 bis 0.04, besonders bevorzugt 0.001 bis 0.03;
f = 1.8 bis 2.6;
g = 0.00001 bis 0.06;
M⁵ = Dy, Nd oder eine Kombination davon;
h = 0 oder
h = 0.00001 bis 0.06;
X = F, Cl, Br oder eine Kombination davon;
i = 0 oder
i = 0.00004 bis 0.04, bevorzugt 0.0002 bis 0.04, besonders bevorzugt 0.001 bis 0.002.

2. Ein lumineszierendes Material nach Anspruch 1 aufweisend einer Partikelgrössenverteilung, wonach mindestens 60% der Partikel einen Durchmesser zwischen 1 µm und 200 µm, vorzugsweise zwischen 2 µm und 100 µm, noch bevorzugter zwischen 5 µm und 60 µm aufweisen.

3. Ein lumineszierendes Material nach Anspruch 1 aufweisend eine Partikelgrössenverteilung, wonach having a particle size distribution, wonach mindestens 90% der Partikel einen Durchmesser zwischen 1 µm und 200 µm, vorzugsweise zwischen 2 µm und 100 µm, noch bevorzugter zwischen 5 µm und 60 µm aufweisen.

4. Lumineszierendes Material nach einem der Ansprüche 1 bis 3 mit einer Emissionswellenlänge zwischen 420 nm und 700 nm.

5. Lumineszierendes Material nach einem der Ansprüche 1 bis 4 mit einem Emissionsmaximum zwischen 480 nm und 550 nm.

6. Verfahren zur Herstellung eines lumineszierenden Materials, umfassend die Schritte
- Mischen der Ausgangsstoffe zu einem Gemisch, vorzugsweise im festen Zustand, noch bevorzugter mit einer Kugelmühle,
- Erwärmen des Gemisches unter reduktiven Bedingungen, insbesondere unter reduktiver Atmosphäre, vorzugsweise umfassend N₂/H₂ oder N_{2/}CO, wobei das Gemisch auf eine Temperatur zwischen 1000°C und 2000°C, vorzugsweise zwischen 1100°C und 1900°C, noch bevorzugter zwischen 1300°C und 1700°C erwärmt wird,
- Abkühlenlassen des Gemischs auf Umgebungstemperatur,
- Mahlen des resultierenden Produkts, um ein gemahlenes Produkt zu erhalten,
**dadurch gekennzeichnet, dass** die Zusammensetzung der chemischen Elemente in der Mischung der folgenden Formel entspricht
M¹ₐM²_{b}M³_{c}M⁴_{d}Eu_{(g-h)}M⁵ₕSr_{(1-a-b-c-d-g)}MgₑAl_{(f-e)}O₍ₖ₋ᵢ₎Xᵢ
wobei
M¹ = Li, Na, K oder eine Kombination davon;
a = 0.0001 bis 0.015, bevorzugt 0.00025 bis 0.01;
M² = Ba;
b = 0.001 bis 0.1, bevorzugt 0.0025 bis 0.075;
M³ = Sc, Ga, Y, Bi oder eine Kombination davon;
c = 0 oder
c = 0.00001 bis 0.05, bevorzugt 0.0001 bis 0.03, besonders bevorzugt 0.001 bis 0.02;
M⁴ = Mn, Pb oder eine Kombination davon;
d = 0 oder
d = 0.00001 bis 0.05, bevorzugt 0.0001 bis 0.05, besonders bevorzugt 0.001 bis 0.02;
e = 0 oder
e = 0.0002 bis 0.06, bevorzugt 0.0006 bis 0.04, besonders bevorzugt 0.001 bis 0.03;
f = 1.8 bis 2.6;
g = 0.00001 bis 0.06;
M⁵ = Dy, Nd oder eine Kombination davon;
h = 0 oder
h = 0.00001 bis 0.06;
X = F, Cl, Br oder eine Kombination davon;
i = 0 oder
i = 0.00004 bis 0.04, bevorzugt 0.0002 bis 0.04, besonders bevorzugt 0.001 bis 0.002.

7. Verfahren zur Herstellung eines lumineszierenden Materials nach Anspruch 6, **dadurch gekennzeichnet, dass** die Ausgangsmaterialien Metalloxide und/oder Metallcarbonate und/oder Metallhalogenide, insbesondere Metallchloride, sind.

8. Verfahren zur Herstellung eines lumineszierenden Materials nach einem der Ansprüche 6 oder 7, **dadurch gekennzeichnet, dass** mindestens ein Ausgangsmaterial ein Metallsalz ist, das beim Erhitzen der Mischung unter den in Anspruch 8 genannten Bedingungen in das entsprechende Oxid umgewandelt wird, wobei das Metallsalz vorzugsweise ein Carboxylat, noch bevorzugter ein Acetat oder ein Oxalat ist.

9. Verfahren zur Herstellung eines lumineszierenden Materials nach einem der Ansprüche 6 bis 8, zusätzlich umfassend einen Schritt Fraktionieren des gemahlenen Produkts nach Partikelgrösse.

10. Verfahren zur Herstellung eines lumineszierenden Materials nach einem der Ansprüche 6 bis 9, **dadurch gekennzeichnet, dass** die Mischung der Ausgangsstoffe zusätzlich ein Flussmittel, vorzugsweise Borsäure oder Bortrioxid, enthält, wobei der Anteil des Flussmittels in der Mischung bei der Zusammensetzung der chemischen Elemente nicht berücksichtigt wird.

11. Formulierung, die ein lumineszierendes Material nach einem der Ansprüche 1 bis 5 enthält.

12. Verwendung eines lumineszierenden Materials nach einem der Ansprüche 1 bis 5 oder einer Formulierung nach Anspruch 11 zum wenigstens teilweisen Beschichten eines Objekts.

13. Gegenstand, der zumindest teilweise mit einem lumineszierenden Material nach einem der Ansprüche 1 bis 5 oder mit einer Formulierung nach Anspruch 11 beschichtet ist.

## Revendications

1. Matériau luminescent comprenant une matrice d'aluminate de strontium, **caractérisé en ce que** le matériau comprend en outre au moins un métal alcalino-terreux, au moins un métal alcalin et au moins un autre élément choisi dans le groupe comprenant
- un halogène, de préférence du chlore, le rapport molaire entre le total des halogènes et de l'oxygène étant compris entre 0.00001 et 0.05, de préférence entre 0.00005 et 0.01, encore plus préférablement entre 0.00025 et 0.005;
- magnésium, le rapport molaire entre le magnésium et l'aluminium étant compris entre 0.0001 et 0.03, de préférence entre 0.0003 et 0.02, encore plus préférablement entre 0.0005 et 0.015;
- Ga, Sc, Y, Bi ou l'une quelconque de leurs combinaisons, le rapport molaire entre Ga, Sc, Y, Bi ou l'une quelconque de leurs combinaisons et le strontium étant compris entre 0.00001 et 0.05, de préférence entre 0.0001 et 0.02, encore plus préférentiellement entre 0.001 et 0.015;
- Pb, Mn ou l'une quelconque de leurs combinaisons, dans lequel le rapport molaire entre Pb, Mn ou l'une quelconque de leurs combinaisons et le strontium étant compris entre 0.00001 et 0.15, de préférence entre 0.0001 et 0.05, encore plus préférentiellement entre 0.001 et 0.02;
ce matériau luminescent étant représenté par le formule
M¹ₐM²_{b}M³_{c}M⁴_{d}Eu_{g}M⁵ₕSr_{(1-a-b-c-d-g-h)}MgₑAl_{(f-e)}O₍ₖ₋ᵢ₎Xᵢ
dans laquelle
M¹ = Li, Na, K ou une de leurs combinaisons;
a = 0.0001 à 0.015, de préférence 0.00025 à 0.01;
M² = Ba;
b = 0.001 à 0.1, de préférence 0.0025 à 0.075;
M³ = Sc, Ga, Y, Bi ou une de leurs combinaisons;
c = 0 ou
c = 0.00001 à 0.05, de préférence 0.0001 à 0.03, et encore plus préférablement 0.001 à 0.02;
M⁴ = Mn, Pb ou une de leurs combinaisons;
d = 0 ou
d = 0.00001 à 0.05, de préférence 0.0001 à 0.05, et encore plus préférablement 0.001 à 0.02;
e = 0 ou
e = 0.0002 à 0.06, de préférence 0.0006 à 0.04, et encore plus préférablement 0.001 à 0.03;
f = 1.8 à 2.6;
g = 0.00001 à 0.06;
M⁵ = Dy, Nd ou une de leurs combinaisons;
h = 0 ou
h = 0.00001 à 0.06;
X = F, Cl, Br ou une de leurs combinaisons;
i = 0 ou
i = 0.00004 à 0.04, de préférence 0.0002 à 0.04, et encore plus préférablement 0.001 à 0.002.

2. Matériau luminescent selon la revendication 1, ayant une distribution granulométrique, dans lequel au moins 60 % des particules ont un diamètre compris entre 1 µm et 200 µm, de préférence entre 2 µm et 100 µm, encore plus préférablement entre 5 µm et 60 µm.

3. Matériau luminescent selon la revendication 1, ayant une distribution granulométrique, dans lequel au moins 90 % des particules ont un diamètre compris entre 1 µm et 200 µm, de préférence entre 2 µm et 100 µm, encore plus préférablement entre 5 µm et 60 µm.

4. Matériau luminescent selon l'une des revendications 1 à 3, ayant une longueur d'onde d'émission comprise entre 420 nm et 700 nm.

5. Matériau luminescent selon l'une des revendications 1 à 4, ayant un maximum d'émission entre 480 nm et 550 nm.

6. Procédé de préparation d'un matériau luminescent, comprenant les étapes
- mélanger les matières premières pour obtenir un mélange, de préférence à l'état solide, encore plus préférablement avec un broyeur à boulets,
- chauffage du mélange dans des conditions réductrices, en particulier dans une atmosphère réductrice, comprenant de préférence N₂/H₂ ou N₂/CO, le mélange étant chauffé à une température comprise entre 1000°C et 2000°C, de préférence entre 1100°C et 1900°C, encore plus préférablement entre 1300°C et 1700°C,
- laisser refroidir le mélange à la température ambiante,
- broyer le produit résultant pour obtenir un produit broyé,
**caractérisé en ce que** la composition des éléments chimiques du mélange répond à la formule
M¹ₐM²_{b}M³_{c}M⁴_{d}Eu_{(g-h)}M⁵ₕSr_{(1-a-b-c-d-g)}MgₑAl_{(f-e)}O₍ₖ₋ᵢ₎Xᵢ
dans laquelle
M¹ = Li, Na, K ou une de leurs combinaisons;
a = 0.0001 à 0.015, de préférence 0.00025 à 0.01;
M² = Ba;
b = 0.001 à 0.1, de préférence 0.0025 à 0.075;
M³ = Sc, Ga, Y, Bi ou une de leurs combinaisons;
c = 0 ou
c = 0.00001 à 0.05, de préférence 0.0001 à 0.03, et encore plus préférablement 0.001 à 0.02;
M⁴ = Mn, Pb ou une de leurs combinaisons;
d = 0 ou
d = 0.00001 à 0.05, de préférence 0.0001 à 0.05, et encore plus préférablement 0.001 à 0.02;
e = 0 ou
e = 0.0002 à 0.06, de préférence 0.0006 à 0.04, et encore plus préférablement 0.001 à 0.03;
f = 1.8 à 2.6;
g = 0.00001 à 0.06;
M⁵ = Dy, Nd ou une de leurs combinaisons;
h = 0 ou
h = 0.00001 à 0.06;
X = F, Cl, Br ou une de leurs combinaisons;
i = 0 ou
i = 0.00004 à 0.04, de préférence 0.0002 à 0.04, et encore plus préférablement 0.001 à 0.002.

7. Procédé de préparation d'un matériau luminescent selon la revendication 6, **caractérisé en ce que** les matières premières sont des oxydes métalliques et/ou des carbonates métalliques et/ou des halogènes métalliques, en particulier des chlorures métalliques.

8. Procédé de préparation d'un matériau luminescent selon l'une des revendications 6 ou 7, **caractérisé en ce qu'**au moins une matière première est un sel métallique qui subit une conversion en l'oxyde correspondant lors du chauffage du mélange dans les conditions énoncées dans la revendication 8, le sel métallique étant de préférence un carboxylate, encore plus préférablement un acétate ou un oxalate.

9. Procédé de préparation d'un matériau luminescent selon l'une des revendications 6 à 8, comprenant en outre l'étape de fractionnement du produit broyé selon la taille des particules.

10. Procédé de préparation d'un matériau luminescent selon l'une des revendications 6 à 9, **caractérisé en ce que** le mélange des matières premières contient en outre un agent fondant, de préférence de l'acide borique ou du trioxyde de bore, la part de l'agent fondant dans le mélange n'étant pas prise en compte dans la composition des éléments chimiques.

11. Formulation contenant un matériau luminescent selon l'une des revendications 1 à 5.

12. Utilisation d'un matériau luminescent selon l'une des revendications 1 à 5, ou d'une formulation selon la revendication 11, pour revêtir au moins partiellement un objet.

13. Objet au moins partiellement revêtu d'un matériau luminescent selon l'une des revendications 1 à 5, ou d'une formulation selon la revendication 11.
